# FASCICULE DE BREVET EUROPEEN

(11) **EP 4 036 005 B1**
(45) Date de publication et mention de la délivrance du brevet: **25.10.2023**
(21) Numéro de dépôt: 22154525.4
(22) Date de dépôt: 01.02.2022
(51) Int. Cl.: B64D 1/02, B64D 1/04, B64D 7/00, B64D 7/08

(54) **PYLÔNE AMÉLIORÉ ET PLATEFORME PORTEUSE ÉQUIPÉE D'UN TEL PYLÔNE**
VERBESSERTER MAST UND TRÄGERPLATTFORM, DIE MIT EINEM SOLCHEN MAST AUSGESTATTET IST
IMPROVED PYLON AND CARRIER PLATFORM PROVIDED WITH SUCH A PYLON

(30) Priorité: 02.02.2021 FR 2100976
(43) Date de publication de la demande: 03.08.2022
(73) Titulaire: THALES, 92400 Courbevoie (FR)
(72) Inventeur: DEPARDON, Bruno, Robert, François, 78851 ELANCOURT (FR); CALDERARA, Jérôme, 33700 MERIGNAC (FR); BERTHOU, Nicolas, 92230 GENEVILLIERS (FR); POMMEPUY, Renaud, Armand, Antoine, 92230 GENEVILLIERS (FR)
(74) Mandataire: Lavoix

(56) Documents cités:
- US-A1- 2012 150 365
- WANG YIMING ET AL: ""Combat Cloud-Fog" Network Architecture for Internet of Battlefield Things and Load Balancing Technology", 2018 IEEE INTERNATIONAL CONFERENCE ON SMART INTERNET OF THINGS (SMARTIOT), IEEE, 17 août 2018 (2018-08-17), pages 263-268, XP033400845, DOI: 10.1109/SMARTIOT.2018.00054
- MARCO ANTONIO SOTELO MONGE ET AL: "Conceptualization and cases of study on cyber operations against the sustainability of the tactical edge", ARXIV.ORG, CORNELL UNIVERSITY LIBRARY, 201 OLIN LIBRARY CORNELL UNIVERSITY ITHACA, NY 14853, 21 janvier 2021 (2021-01-21), XP081863831,
- LYKE JIM ET AL: "Resilient Network Advanced Testbed (RESINATE) - A Radio Frequency/Optical Communications and Networking Testbed", 2019 IEEE AEROSPACE CONFERENCE, IEEE, 2 mars 2019 (2019-03-02), pages 1-17, XP033561671, DOI: 10.1109/AERO.2019.8741758

## Description

La présente invention a pour domaine celui de l'aéronautique.

A la date de dépôt de la présente demande de brevet, il est envisagé que les avions de la prochaine génération ou avions du futur soient interconnectés à une infrastructure de combat aérien collaboratif, ou *« air combat cloud »* en anglais. Il s'agit d'une approche fondée sur la mise en réseau et l'exploitation de ressources partagées entre différents acteurs associés à un théâtre d'opérations ayant une composante aérienne. Cet avion du futur sera ainsi en mesure, en vol, au cours de la réalisation de sa mission, de partager des informations et des ressources (notamment de calculs avancés) au travers de liaisons adaptées établies avec d'autres acteurs du théâtre d'opérations (autres avions de chasse, drones de combat ou d'observation, unités au sol, etc.).

Il y a cependant un besoin pour que des avions patrimoniaux (« legacy » en anglais), c'est-à-dire appartenant aux générations d'avions précédentes et actuellement en service, puissent également contribuer à une telle infrastructure de combat aérien collaboratif.

En effet, dès à présent, pour démontrer la faisabilité de certaines solutions avant de les développer pour l'avion du futur, il serait souhaitable de pouvoir les tester en vol sur un avion patrimonial apte à intégrer une infrastructure de combat aérien collaboratif.

De plus, dans l'avenir, il serait souhaitable qu'un avion patrimonial puisse être utilisé et pleinement intégré dans une infrastructure de combat aérien collaboratif, au côté et au même titre que des avions du futur.

US 2012/150365 A décrit un kit d'avionique de précision sans fil destiné à équiper les avions pour faciliter la communication entre le poste de pilotage et les magasins militaires modernes sans modification du matériel ou du logiciel de l'avion. L'invention a donc pour but de répondre à ce besoin

Pour cela, l'invention a pour objet un pylône amélioré, destiné à être monté sur une plateforme porteuse pour l'emport d'une charge, caractérisé en ce que ledit pylône comporte un équipement électronique, logé à l'intérieur d'un carénage du pylône et comportant un calculateur, une interface interne adaptée pour établir une liaison de communication entre l'équipement électronique et un bus de données de la plateforme porteuse et/ou de la charge, et des moyens de communication adaptés pour établir une liaison de communication sans fil avec des moyens émetteur-récepteur d'une infrastructure de combat aérien collaboratif, le calculateur étant programmé pour contribuer à des services opérationnels sur la base des données échangées avec la plateforme porteuse et/ou la charge et en coopération avec l'infrastructure de combat aérien collaboratif.

Suivant des modes particuliers de réalisation, le pylône comporte une ou plusieurs des caractéristiques suivantes, prises isolément ou suivant toutes les combinaisons techniquement possibles :
L'interface interne est propre à communiquer avec le bus de données de la plateforme porteuse et / ou de la charge selon un protocole dédié aux transmissions militaires.

Les moyens de communication comportent un module de communication radio couplé à un système antennaire, adaptés pour établir une liaison bidirectionnelle radioélectrique avec des points d'accès d'un réseau d'accès radio de l'infrastructure de combat aérien collaboratif.

Les moyens de communication comportent un module de communication optique couplé à une unité d'émission/réception optique de manière à établir une liaison sans fil bidirectionnelle lumineuse avec des points d'accès optiques de l'infrastructure de combat aérien collaboratif.

Le pylône comporte des moyens mécaniques standardisés pour le monter sur la plateforme porteuse et pour emporter au moins une charge.

Le pylône comporte un premier connecteur réseau destiné à être relié par un connecteur réseau conjugué au bus de données de la plateforme porteuse et un second connecteur réseau destiné à être relié par un connecteur réseau conjugué à un bus de données d'une charge, les premier et second connecteurs réseau étant reliés par un câble réseau, l'interface interne étant connectée audit câble réseau.

Le pylône comporte un connecteur électrique destiné à être relié par un connecteur électrique adapté à une source d'alimentation électrique de la plateforme porteuse, l'équipement électronique étant alimenté via ledit connecteur électrique.

L'invention a également pour objet une plateforme porteuse, caractérisée en ce qu'elle est équipée d'au moins un pylône amélioré conforme au pylône précédent.

De préférence, le pylône amélioré emporte au moins une charge.

De préférence encore, la plateforme emporte une interface homme-machine en communication avec l'équipement électronique du pylône amélioré de manière à permettre à un pilote de la plateforme d'interagir avec au moins un desdits services opérationnels.

L'invention et ses avantages seront mieux compris à la lecture de la description détaillée qui va suivre d'un mode de réalisation particulier, donné uniquement à titre d'exemple illustratif et non limitatif, cette description étant faite en se référant aux dessins annexés, sur lesquels :
- la figure 1 est une représentation schématique d'un aéronef équipé d'au moins un pylône amélioré selon l'invention ; et,
- la figure 2 est une représentation schématique sous forme de blocs fonctionnels du pylône amélioré de la figure 1.

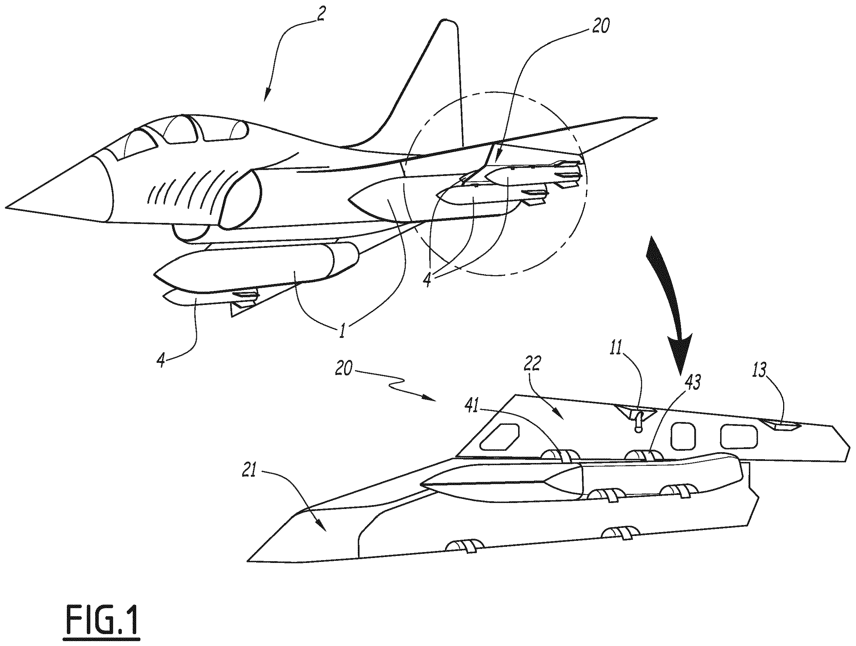

La figure 1 représente un avion de chasse 2 en tant qu'exemple d'aéronef. Il s'agit d'un avion de chasse patrimonial. Il s'agit par exemple d'un avion de chasse appartenant à la génération d'avions de chasse qui est en exploitation à la date de dépôt de la présente demande de brevet. L'avion de chasse 2 ne présente donc aucune des capacités qui sont ou seront envisagées pour les avions de la prochaine génération en ce qui concerne l'intégration à une infrastructure de combat aérien collaboratif, *« air combat cloud »,* notamment aucune capacité d'interconnexion dédiée et directe à une telle infrastructure.

Cependant, pour permettre à cet avion de chasse 2 d'intégrer une infrastructure de combat aérien collaboratif, cet avion de chasse 2 est équipé d'un pylône amélioré 20 selon l'invention. En variante, l'avion de chasse est équipé de deux ou plusieurs pylônes améliorés.

Selon l'état de la technique, un pylône est une interface équipant un avion qui permet l'emport d'une ou plusieurs charges externes, telles que des bombes 4 ou un réservoir auxiliaire 1.

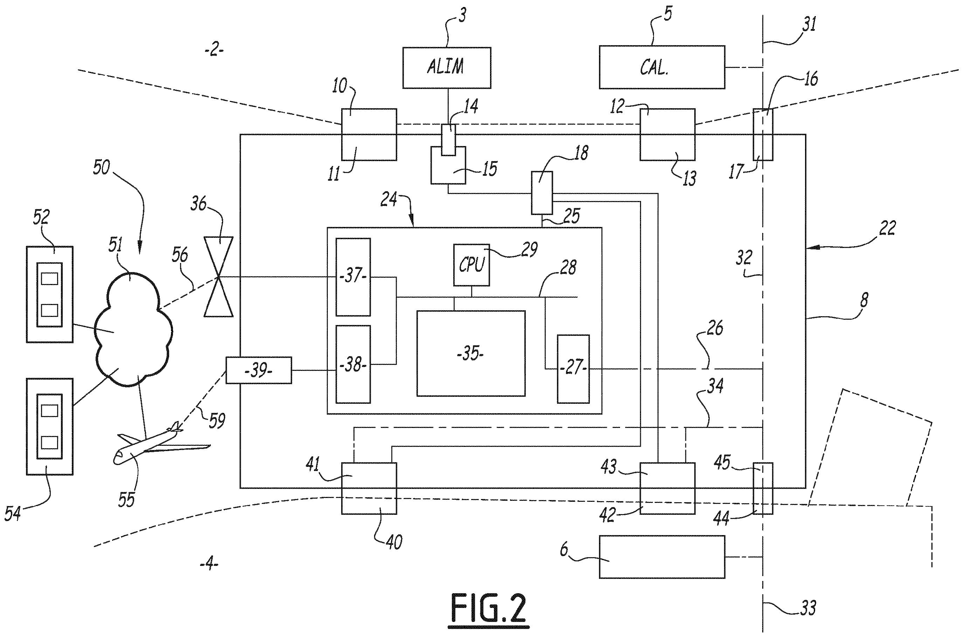

Le pylône 20 de la figure 2 est composite, au sens où il comporte un pylône primaire 22, destiné à être monté directement sous l'aile ou le ventre de celui-ci, et un pylône secondaire 21, destiné à être monté directement sous le pylône primaire 22. Alors que le pylône primaire 22 constitue un moyen d'emport d'une seule charge, le pylône secondaire 21 constitue un moyen d'emport de plusieurs charges, typiquement plusieurs bombes 4.

En variante, le pylône primaire 22 est utilisé seul pour l'emport d'une charge, typiquement une bombe 4 ou un réservoir auxiliaire 1. C'est d'ailleurs cette variante qui est représentée sur la figure 2.

Dans le présent mode de réalisation, c'est le pylône primaire 22 qui est perfectionné pour offrir à l'avion de chasse 2 une intégrabilité à un *« air combat cloud ».* Mais, en variante, c'est le pylône secondaire 21 qui est perfectionné. Dans ce qui suit, la description se focalisant sur le pylône primaire 22, le qualificatif de « primaire » sera implicite.

Comme représenté sur la figure 2, le pylône 22 constitue une interface mécanique, électrique et de communication entre l'avion de chasse 2 et une charge, telle qu'une bombe 4.

Le pylône 22 comporte un carénage 8, métallique et/ou en matériaux composites.

Conformément à l'état de la technique, le pylône 22 est connecté mécaniquement à l'aile de l'avion de chasse 2 par des moyens mécaniques standardisés, qui comportent par exemple une paire de connecteurs 10, 12 sous l'aile de l'avion 2 et une paire de connecteurs conjugués 11, 13 sur le pylône 22.

De manière similaire et toujours conformément à l'état de la technique, la charge 4 est couplée mécaniquement au pylône 22 via des moyens mécaniques standardisés, tels que par exemple une paire de connecteurs 40, 42 sur la charge 4 et une paire de connecteurs conjugués 41, 43 sous le pylône 22.

L'avion de chasse 2 embarque un système 5, qui est connecté à un bus de données 31 interne à l'avion de chasse 2. Par exemple, le bus de données est un bus série multiplexé, par exemple encore conforme à la norme 1553. En variante, ce bus respecte d'autres standards de bus dédiés.

Par exemple, le système 5 est un système de partage de données du type « système de navigation et d'attaque », et le protocole de communication mis en oeuvre sur le bus de données 31 est un protocole dédié aux transmissions avioniques militaires, de préférence le protocole international « Liaison 16 ». En variante, d'autres protocoles peuvent être mis en oeuvre.

La charge 4 comporte un calculateur embarqué 6, qui est connecté à un bus de données 33 interne à la charge 4.

Conformément à l'état de la technique, le pylône 22 permet de connecter les bus 31 et 33 de l'avion 2 et de la charge 4 entre eux. Ceci permet par exemple au système 5 de communiquer au calculateur 6 des données de désignation d'objectif, ou encore la position actuelle de l'avion de chasse 2 pour que le calculateur 6 détermine une trajectoire à suivre pour atteindre une cible.

Pour établir cette connexion de données, le pylône 22 comporte, côté avion de chasse 2, un connecteur réseau 17, destiné à être connecté à un connecteur réseau conjugué 16 prévu sur l'avion et relié au bus de données 31 de ce dernier.

De manière symétrique, le pylône 22 comporte, côté charge 4, un connecteur réseau 45 destiné à être connecté à un connecteur réseau conjugué 44 prévu sur la charge et relié au bus de données 33 de cette dernière.

Enfin, un câble réseau 32 adapté permet de relier les connecteurs 17 et 45 entre eux et, par conséquent, d'associer les bus de données de l'avion et de la charge.

Par exemple et de manière connue, les connecteurs mécaniques 40, 41 et 42, 43 sont du type pyrotechnique. En variante il s'agit de connecteurs pneumatiques. Ils sont connectés au bus de données 31 de l'avion de chasse 2, par exemple via un câble réseau 34 relié au câble réseau 35, de manière à pouvoir recevoir une commande d'actionnement pour découpler la bombe 4 du pylône 22.

Le pylône 22 est raccordé à une source d'alimentation 3 de l'avion 2, par exemple pour alimenter en puissance électrique des connecteurs mécaniques 41 et 43. En conséquence, le pylône 22 comporte un connecteur électrique 15 destiné à coopérer avec un connecteur électrique conjugué 14 prévu sur l'avion 2 et relié à la source 3. Un circuit de répartition 18 est de préférence interposé entre le connecteur 15 et les connecteurs mécaniques 41 et 43 pour alimenter ces derniers.

Selon l'invention, le pylône 22 est perfectionné en le munissant d'un équipement électronique 24 permettant à l'avion de chasse 2 d'intégrer une infrastructure de combat aérien collaboratif, telle que l'infrastructure 50.

L'équipement électronique 24 est logé à l'intérieur du carénage 8 du pylône 22.

L'équipement électronique 24 comporte un calculateur comportant des moyens de calcul, tel qu'un processeur 29, et des moyens de mémorisation, tels qu'une mémoire 35. La mémoire 35 stocke notamment les instructions de programmes d'ordinateur qui, lorsqu'elles sont exécutées par le processeur 29, permettent la mise en oeuvre de certaines fonctionnalités, notamment des services opérationnels.

Ce calculateur est avantageusement plus récent et par conséquent plus puissant en termes de capacité de calcul et/ou de capacité de mémorisation que celui de l'avion porteur. Ceci permet de suivre l'évolution des technologies et de profiter des technologies dernier cri sans avoir à modifier profondément l'avion porteur.

L'équipement électronique 24 comporte une interface interne 27 entre un bus de données 28 interne à l'équipement 24 et les bus de données 31 et 33 de l'avion de chasse 2 et de la charge 4. L'interface 27 est par exemple reliée au câble 32 par un câble réseau 26.

Pour l'alimentation en puissance électrique de l'équipement électronique 24, un fil 25 permet le branchement de l'équipement 24 au circuit de dérivation 18 du pylône 22.

L'équipement électronique 24 comporte des moyens de communication sans fil pour l'échange de données avec l'infrastructure de combat aérien collaboratif 50.

Par exemple, l'équipement 24 comporte un module de communication radio 37 couplé à un système antennaire 36 permettant d'établir une liaison bidirectionnelle radioélectrique 56 avec des points d'accès d'un réseau d'accès radio 51 de l'infrastructure 50, tels que par exemple des antennes situées au sol.

L'émission d'ondes radioélectrique par un dispositif additionnel à l'aéronef présente le risque de perturber les communications des dispositifs natifs de ce dernier. Avantageusement, le polynôme intègre des moyens passifs d'écrantage électromagnétique disposés entre l'antenne 26 placée sur le carénage du pylône et le corps de l'avion de chasse.

En variante ou en combinaison, l'équipement électronique 24 comporte un module de communication optique 38 couplé à une unité d'émission/réception optique 39 permettant d'établir une liaison sans fil bidirectionnelle lumineuse 59 avec des points d'accès optiques de l'infrastructure 50, par exemple d'autres unités d'émission/réception optique équipant des avions de chasse 55 intégrés à l'infrastructure de combat aérien collaboratif 50. Avantageusement, de tels moyens de communication optique intègrent un système de pointée adapté. Ce mode de communication présente l'avantage de contribuer à la furtivité de l'avion. Il peut être utilisé pour des communications à courte portée à des fins de collaboration avec des acteurs aériens proches.

Grâce à ces liaisons, l'équipement électronique 24 est propre à communiquer avec des ressources, par exemple des calculateurs au sol, tels que les serveurs 52 et 54 connectés au réseau d'accès radio 51, ou encore d'autres équipements embarqués à bord des avions 55 intégrés à l'infrastructure de combat aérien collaboratif 50.

De la sorte, l'avion équipé du pylône amélioré selon l'invention peut participer à divers services.

Ainsi par exemple, parmi les programmes exécutés par l'équipement électronique 24 peuvent être présentes des fonctionnalités permettant de fournir à un service de suivi des acteurs du théâtre d'opérations des informations de vol. Par exemple, l'équipement 24 est propre à interroger, selon le protocole utilisé sur le bus 31, le système 5 de l'avion de chasse 2, de manière à obtenir les valeurs courantes des paramètres de vol de l'avion : position, vitesse, etc. L'équipement électronique 24 est propre à mettre en forme ces informations selon le protocole de communication utilisé sur la liaison 56 de manière à les transmettre, vers par exemple le serveur 52 responsable de la mise à jour d'une image de la situation opérationnelle rassemblant les informations de vol des différents acteurs du théâtre d'opérations.

Par exemple encore, parmi les programmes exécutés par l'équipement électronique 24, on trouve une fonctionnalité d'estimation de l'autonomie de l'avion 2. Par exemple, l'équipement 24 est propre à interroger, selon le protocole utilisé sur le bus 31, le système 5 de l'avion de chasse 2 pour connaître le niveau du comburant dans un réservoir principal et / ou la charge (dans ce cas un réservoir auxiliaire 1) pour connaître le niveau de comburant dans ce réservoir auxiliaire.

L'équipement électronique 24 est propre à mettre en forme ces informations selon le protocole de communication utilisé sur la liaison 56 de manière à les transmettre, vers par exemple le serveur 54.

Un serveur 54 est propre, compte tenu du type de l'avion de chasse 2 et de ses équipements (notamment les charges qu'il embarque au décollage et celles qu'il a déjà utilisées au cours de sa mission), à calculer, compte tenu des informations fournies par l'avion 2, une autonomie restante. Cette autonomie restante est retransmise vers l'équipement électronique 24, via le réseau 50 et la liaison 56. Cette information est mise en forme par l'équipement 24 pour être retransmise selon le protocole de communication adapté sur le bus de données interne vers le système 5 de l'avion de chasse 2.

Avantageusement, cette information d'autonomie restante est affichée sur une interface homme-machine - IHM pour que le pilote en prenne connaissance. Par exemple, cette IHM est une tablette numérique embarquée à bord de l'avion.

Plus généralement, l'avion de chasse 2 embarque une interface homme-machine en communication avec l'équipement électronique 24 du pylône de manière à permettre au pilote d'interagir avec certaines des services opérationnels offerts par l'équipement électronique et l'infrastructure de combat aérien collaboratif 50. Au cas où la communication entre l'équipement électronique 24 et l'IHM dans le cockpit ne peut pas se faire via le bus 31 et le protocole associé, elle peut se faire via une liaison sans fil, par exemple du type Wi-Fi, de manière à ne pas avoir à ajouter un réseau matériel à l'avion.

Dans encore un autres exemple de service, parmi les programmes exécutés par l'équipement électronique 24, on trouve une fonctionnalité de répartition des calculs entre les calculateurs des différents avions d'une patrouille. Par exemple, l'équipement 24 est propre à recevoir des données par la liaison 59 des autres avions d'une patrouille à laquelle il appartient. Par exemple les paramètres de vol de chacun des autres avions de la patrouille sont reçus par l'équipent 24 via la liaison 53. L'équipement électronique 24 est alors propre à effectuer un traitement complexe sur ces données et à retransmettre les résultats obtenus vers le système 5 et/ou vers les autres avions 55. Par exemple, en tenant compte des paramètres de vol de l'avion 2 et de ceux d'un autre avion 55, l'équipement 24 est propre à déterminer une distance courante séparant l'avion 2 de cet autre avion 55 et à transmettre des consignes de vol au système 5 pour que l'avion 2 modifie sa position et/ou vers l'autre avion 55 de manière à ce qu'il modifie sa position. De la sorte, un vol en configuration rapprochée entre l'avion 2 et cet autre avion 55 peut être contrôlé.

D'autres fonctionnalités sont envisageables par l'homme du métier.

En variante, l'équipement 14 est propre à être interfacé avec d'autres réseaux internes de l'avion, comme par exemple un réseau de communication voix pour l'écoute et l'émission de messages vocaux par le pilote de l'aéronef.

En variante, une batterie est ajoutée à l'intérieur du carénage du pylône pour répondre, en vol, aux besoins de puissance supplémentaire non satisfaits par l'avion porteur, ou encore, au sol, lorsque le pylône amélioré ne peut plus être alimenté par l'avion porteur, mais que l'on souhaite conserver l'accès au « air combat cloud », par exemple pour retransmettre de l'avion vers le sol des données post-mission.

En variante, la plateforme porteuse du pylône amélioré selon l'invention peut être un aéronef, avec ou sans équipage (drone), plus léger ou plus lourd que l'air, comme un aérodyne à voilure fixe (par exemple un avion de surveillance maritime) ou à voilure tournante (par exemple un hélicoptère). La plateforme porteuse du pylône amélioré selon l'invention peut également être un système spatiale (par exemple un satellite artificiel). La plateforme porteuse du pylône amélioré selon l'invention peut enfin être un système de surface, sol (par exemple un véhicule blindé) ou mer (par exemple une frégate).

En variante, le pylône amélioré peut être monté sur tout point d'emport prévu sur la plateforme porteuse.

L'invention tire ainsi profit de la présence d'un volume (le pylône sur l'aéronef porteur) qui est équipé d'une alimentation en puissance électrique et d'une liaison avec le bus de données de la plateforme, pour y loger les moyens électroniques permettant de conférer à la plateforme des fonctionnalités nécessaires pour un enrôlement auprès d'un *« air combat cloud ».*

Les modifications à apporter à la plateforme, c'est-à-dire à l'avion porteur, sont nulles ou tout au moins très limitées. Il n'est pas nécessaire de modifier l'avion et ses emports au plan aérodynamique, ni de modifier leur connectique, ce qui nécessiterait sinon d'avoir à requalifier la plateforme.

La présente invention est particulièrement simple à mettre en oeuvre puisqu'un pylône présente des connecteurs mécaniques, électriques et de données standardisés, voir universels.

Il n'est pas non plus nécessaire de développer un nouveau pylône, ce qui nécessiterait de le requalifier, notamment dans ses propriétés aérodynamiques.

Le pylône selon l'invention permet donc de mettre à niveau un aéronef existant de manière à ce qu'il satisfasse aux normes et qu'il puisse se connecter et interagir avec une infrastructure de combat collaboratif.

Il permet une interopérabilité entre les dispositifs embarqués par un avion « *legacy »* avec les normes, standards et protocoles qui seront développés dans l'avenir pour réaliser ces infrastructures de combat aérien collaboratif.

## Revendications

1. Pylône amélioré (22), destiné à être monté sur une plateforme porteuse (2) pour l'emport d'une charge (4), où ledit pylône comporte un équipement électronique (24), logé à l'intérieur d'un carénage (8) du pylône (22) et comportant un calculateur (29, 35), une interface interne (27) adaptée pour établir une liaison de communication entre l'équipement électronique (24) et un bus de données (31, 33) de la plateforme porteuse (2) et/ou de la charge (4), et des moyens de communication (37, 36, 38, 36) adaptés pour établir une liaison de communication sans fil avec des moyens émetteur-récepteur d'une infrastructure de combat aérien collaboratif (50), le calculateur étant programmé pour contribuer à des services opérationnels sur la base des données échangées avec la plateforme porteuse (2) et/ou la charge (4) et en coopération avec l'infrastructure de combat aérien collaboratif (50).

2. Pylône selon la revendication 1, dans lequel l'interface interne (27) est propre à communiquer avec le bus de données (31) de la plateforme porteuse et / ou de la charge selon un protocole dédié aux transmissions militaires.

3. Pylône selon la revendication 1 ou la revendication 2, dans lequel les moyens de communication comportent un module de communication radio (37) couplé à un système antennaire (36), adaptés pour établir une liaison bidirectionnelle radioélectrique (56) avec des points d'accès d'un réseau d'accès radio (51) de l'infrastructure de combat aérien collaboratif (50).

4. Pylône selon l'une quelconque des revendications 1 à 3, dans lequel les moyens de communication comportent un module de communication optique (38) couplé à une unité d'émission/réception optique (39) de manière à établir une liaison sans fil bidirectionnelle lumineuse (59) avec des points d'accès optiques de l'infrastructure de combat aérien collaboratif (50).

5. Pylône selon l'une quelconque des revendications 1 à 4, comportant des moyens mécaniques standardisés pour monter ledit pylône sur la plateforme porteuse et pour emporter au moins une charge.

6. Pylône selon l'une quelconque des revendications 1 à 5, comportant un premier connecteur réseau (17) destiné à être relié par un connecteur réseau conjugué au bus de données (31) de la plateforme porteuse (2) et un second connecteur réseau (45) destiné à être relié par un connecteur réseau conjugué à un bus de données (33) d'une charge, les premier et second connecteurs réseau étant reliés par un câble réseau (32), l'interface interne (27) étant connectée audit câble réseau.

7. Pylône selon l'une quelconque des revendications 1 à 6, comportant un connecteur électrique (15) destiné à être relié par un connecteur électrique adapté à une source d'alimentation électrique (3) de la plateforme porteuse (2), l'équipement électronique (24) étant alimenté via ledit connecteur électrique (15).

8. Plateforme porteuse équipée d'au moins un pylône amélioré selon l'une quelconque des revendications précédentes.

9. Plateforme selon la revendication 8 dans laquelle le pylône amélioré emporte au moins une charge (4).

10. Plateforme selon la revendication 8 ou la revendication 9 dans laquelle elle emporte une interface homme-machine en communication avec l'équipement électronique (24) du pylône amélioré de manière à permettre à un pilote de la plateforme d'interagir avec au moins un desdits services opérationnels.

## Patentansprüche

1. Verbesserter Mast (22), der dazu bestimmt ist, auf einer Trägerplattform (2) für das Mitführen einer Last (4) montiert zu werden, wobei der Mast eine elektronische Ausrüstung (24) umfasst, die im Inneren einer Verkleidung (8) des Masts (22) untergebracht ist und umfassend einen Rechner (29, 35), eine interne Schnittstelle (27), die angepasst ist, um eine Kommunikationsverbindung zwischen der elektronischen Ausrüstung (24) und einem Datenbus (31, 33) der Trägerplattform (2) und/oder der Last (4) herzustellen, und Kommunikationseinrichtungen (37, 36, 38, 36), die angepasst sind, um eine drahtlose Kommunikationsverbindung mit Sender-Empfänger-Einrichtungen einer kollaborativen Luftkampfinfrastruktur (50) herzustellen, wobei der Rechner programmiert ist, um basierend auf den mit der Trägerplattform (2) und/oder der Last (4) ausgetauschten Daten und in Zusammenarbeit mit der kollaborativen Luftkampfinfrastruktur (50) zu operativen Diensten beitragen.

2. Mast nach Anspruch 1, wobei die interne Schnittstelle (27) geeignet ist, um gemäß einem für militärische Übertragungen bestimmten Protokoll mit dem Datenbus (31) der Trägerplattform und/oder der Last zu kommunizieren.

3. Mast nach Anspruch 1 oder Anspruch 2, wobei die Kommunikationseinrichtungen ein Funkkommunikationsmodul (37) umfassen, das mit einem Antennensystem (36) gekoppelt ist, das angepasst ist, um eine bidirektionale Funkverbindung (56) mit Zugangspunkten eines Funkzugangsnetzes (51) der Infrastruktur für den kollaborativen Luftkampf (50) herzustellen.

4. Mast nach einem der Ansprüche 1 bis 3, wobei die Kommunikationseinrichtungen ein optisches Kommunikationsmodul (38) umfassen, das mit einer Sende-/Empfangseinheit (39) gekoppelt ist, um eine bidirektionale drahtlose Lichtverbindung (59) zu optischen Zugangspunkten der kollaborativen Luftkampfinfrastruktur (50) herzustellen.

5. Mast nach einem der Ansprüche 1 bis 4, umfassend standardisierte mechanische Einrichtungen, um den Mast auf der Trägerplattform zu montieren und mindestens eine Last mitzuführen.

6. Mast nach einem der Ansprüche 1 bis 5, umfassend einen ersten Netzwerkverbinder (17) zum Verbinden über einen konjugierten Netzwerkverbinder mit dem Datenbus (31) der Trägerplattform (2) und einem zweiten Netzwerkverbinder (45) zum Verbinden über einen konjugierten Netzwerkverbinder mit einem Datenbus (33) einer Last, wobei der erste und der zweite Netzwerkverbinder über ein Netzwerkkabel (32) verbunden sind und die interne Schnittstelle (27) mit dem Netzwerkkabel verbunden ist.

7. Mast nach einem der Ansprüche 1 bis 6, umfassend einen elektrischen Verbinder (15), der dazu bestimmt ist, über einen geeigneten elektrischen Anschluss mit einer elektrischen Stromquelle (3) der Trägerplattform (2) verbunden zu sein, wobei die elektronische Ausrüstung (24) über den elektrischen Verbinder (15) mit Strom versorgt wird.

8. Trägerplattform, die mit mindestens einem verbesserten Mast nach einem der vorherigen Ansprüche ausgerüstet ist.

9. Plattform nach Anspruch 8, wobei der verbesserte Mast mindestens eine Last (4) mitführt.

10. Plattform nach Anspruch 8 oder 9, wobei sie eine Mensch-Maschine-Schnittstelle mitführt, die mit der elektronischen Ausrüstung (24) des verbesserten Mastes in Verbindung ist, sodass ein Pilot der Plattform mit mindestens einem der operativen Dienste interagieren kann.

## Claims

1. Improved pylon (22), intended to be mounted on a carrying platform (2) for carrying a load (4),wherein said pylon comprises electronic equipment (24), housed inside a fairing (8) of the pylon (22) and comprising a computer (29, 35), an internal interface (27) adapted to establish a communication link between the electronic equipment (24) and a data bus (31, 33) of the carrier platform (2) and/or of the load (4), and communication means (37, 36, 38, 36) adapted to establish a wireless communication link with transmitter-receiver means of a collaborative air combat infrastructure (50), the computer being programmed to contribute to operational services on the basis of the data exchanged with the carrier platform (2) and/or the load (4) and in cooperation with the collaborative air combat infrastructure (50).

2. Tower as claimed in claim 1, in which the internal interface (27) is suitable for communicating with the data bus (31) of the carrier platform and/or the load using a protocol dedicated to military transmissions.

3. Tower as claimed in claim 1 or claim 2, in which the communication means comprise a radio communication module (37) coupled to an antenna system (36), adapted to establish a bidirectional radio link (56) with access points of a radio access network (51) of the collaborative air combat infrastructure (50).

4. Tower according to any one of claims 1 to 3, in which the communication means comprise an optical communication module (38) coupled to an optical transmission/reception unit (39) so as to establish a luminous two-way wireless link (59) with optical access points of the collaborative air combat infrastructure (50).

5. Tower according to any one of claims 1 to 4, comprising standardised mechanical means for mounting the said tower on the load-bearing platform and for carrying at least one load.

6. Tower according to any one of claims 1 to 5, comprising a first network connector (17) intended to be connected by a mating network connector to the data bus (31) of the carrier platform (2) and a second network connector (45) intended to be connected by a mating network connector to a data bus (33) of a load, the first and second network connectors being connected by a network cable (32), the internal interface (27) being connected to the said network cable.

7. Tower according to any one of claims 1 to 6, comprising an electrical connector (15) intended to be connected by a suitable electrical connector to an electrical power source (3) of the support platform (2), the electronic equipment (24) being powered via said electrical connector (15).

8. Carrying platform equipped with at least one improved pylon according to any one of the preceding claims.

9. Platform according to claim 8 in which the improved pylon carries at least one load (4).

10. Platform according to claim 8 or claim 9 in which it carries a man-machine interface in communication with the electronic equipment (24) of the improved tower so as to enable a pilot of the platform to interact with at least one of the said operational services.
